(19) **Europäisches Patentamt**
**European Patent Office**
**Office européen des brevets**

(11) **EP 1 368 421 B1**

(12) **EUROPEAN PATENT SPECIFICATION**

(45) Date of publication and mention
of the grant of the patent:
**31.10.2007 Bulletin 2007/44**

(51) Int Cl.:
*C08J 9/35* (2006.01)  *C08J 9/228* (2006.01)
*C08L 61/06* (2006.01)  *C08L 61/00* (2006.01)
*C08L 25/06* (2006.01)  *C08L 25/08* (2006.01)
*C08J 9/00* (2006.01)  *B29C 44/44* (2006.01)
*E04C 2/292* (2006.01)  *E04B 1/62* (2006.01)

(21) Application number: **02710706.9**

(22) Date of filing: **14.02.2002**

(86) International application number:
**PCT/AU2002/000152**

(87) International publication number:
**WO 2002/064672 (22.08.2002 Gazette 2002/34)**

(54) **POLYMERIC COMPOSITE FOAM**

POLYMERVERBUNDSCHAUMSTOFF

MOUSSE POLYMERE COMPOSITE

(84) Designated Contracting States:
**AT BE CH CY DE DK ES FI FR GB GR IE IT LI LU MC NL PT SE TR**
Designated Extension States:
**AL LT LV MK RO SI**

(30) Priority: **14.02.2001 AU PR309101**

(43) Date of publication of application:
**10.12.2003 Bulletin 2003/50**

(73) Proprietor: **Styrophen International Pty. Ltd.**
**Point Lonsdale, Victoria 3225 (AU)**

(72) Inventors:
• **QUIST, Ingmar, Per**
**Carrum, Victoria 3197 (AU)**
• **JOHN, Anthony, Jacob**
**St Albans, Victoria 3021 (AU)**

(74) Representative: **Khan, Mohammed Saiful Azam et al**
**Eric Potter Clarkson LLP**
**Park View House**
**58 The Ropewalk**
**Nottingham, NG1 5DD (GB)**

(56) References cited:
**DE-A- 19 910 257**  **DE-A1- 2 153 550**
**DE-A1- 19 910 257**  **GB-A- 2 013 209**
**SU-A- 453 066**  **SU-A- 585 189**
**SU-A- 745 539**  **SU-A- 1 688 577**
**US-A- 3 862 912**  **US-A- 4 596 682**
**US-A- 4 714 715**  **US-A- 4 837 999**
**US-A- 4 992 254**  **US-A- 5 433 050**

• **DATABASE WPI Week 199733, Derwent Publications Ltd., London, GB; Class A88, AN 1997-353125, XP003007998 & FI 9 505 534 A (NESTE OY) 17 May 1995**
• **DATABASE WPI Week 198745, Derwent Publications Ltd., London, GB; Class Q43, AN 1987-318667, XP003007999 & JP 62 227 934 A (MOGE) 06 October 1987**

## Description

### Technical Field

This invention relates to polymeric composite foams. The invention also relates to liquid compositions for preparing polymeric composite foams and insulating panels formed from these foams.

### Background to the Invention

Polymeric foams are widely used for thermal and acoustic insulation in building construction. Polymeric foams such as polystyrene foams are widely used as a core enclosed within sheets of steel to form insulation panels for cool rooms and factories because of their excellent mechanical properties, high insulation value and low cost. The main negative feature of these insulation panels is their high propensity to burn and/or melt in a fire leading to the loss of structural strength. Phenolic and furan foams, on the other hand have excellent fire resistance properties, but are not able to be used as the core in steel clad panels because of their poor mechanical properties. They are extremely rigid and form a friable surface when cut.

A further problem with phenolic and furan foams is achieving satisfactory adhesion to the steel sheets.

United Kingdom patent application GB 2013209A discloses a method of forming panels of a polycondensable resin. The invention of this citation dissociates the expansion or foaming of the resin from its polymerisation or polycondensation. This means that expansion occurs before polymerisation or hardening of the resin. The method requires external heating as expansion is required to take place before polymerisation. The composition may include polystyrene beads. However, these are used in expanded form as the polycondensation reaction takes places at approximately 60°, a temperature too low to allow the polystyrene beads to expand. To expand polystyrene beads temperatures close to the softening point or glass transition temperature of polystyrene are required. This citation has a complex heating regime to overcome the problems perceived from having curing/polymerisation processes linked. It is for this reason that the foaming and curing/polymerisation of the polycondensable phase are separated and why expanded polystyrene beads are used.

Belgium patent application BE 865001 is similar to the UK patent discussed above as the composite foam is prepared using expanded polystyrene beads. The heating in their process is limited to temperatures less than that required for deformation of the polystyrene particles.

USSR patent application SU 585189 also discloses compositions that involve the use of expanded polystyrene beads.

German patent application DE 19910257 discloses fire resistant polymer foam compositions that include 5-50 wt % of expandable graphite. The compositions are prepared by adding the liquid mixture to a mould and heating by external steam. Both examples use expanded polystyrene beads and the weight ratio of phenolic resin to polystyrene is less than 0.5.

### Summary of the Invention

Preferably the weight percent of polystyrene polymer in the composite foam

Preferably the weight percent of polystyrene polymer in the composite foam is in the range 5-50 and more preferably 10-40.

Preferably the composite foam has a density in the range 25 - 200 kg/m$^3$.

Preferably the composite foam has a density in the range 25 - 50 kg/m$^3$.

Preferably the composite foam has a density in the range 50 - 200 kg/m$^3$.

In an alternative form the invention provides a steel clad insulation panel having a core of composite foam comprising a continuous phase of phenolic/furan polymer and a disperse phase of foamed polystyrene polymer wherein the weight ratio of phenolic/furan polymer to polystyrene is at least 1.

This invention provides in one form a polymeric composite foam comprising a continuous phase of a furan polymer or phenolic and furan polymer and a disperse phase of foamed polystyrene polymer wherein the composite foam is prepared by reacting a liquid foamable composition comprising 5-50% w/w of foamable unexpanded polystyrene beads, 50-95% w/w of a resin or resin mixture selected from the group of a furan resin, a phenolic resin and furan resin, and a phenolic resin and furfuryl alcohol and an effective amount of an acid catalyst wherein the reacted foamable composition achieves temperatures sufficient to polymerise said resin or resin mixture and expand the polystyrene polymer without requiring the application of external heat or energy sources.

In a further alternative form the invention provides a method of forming a mass of polymeric composite foam comprising adding a liquid foamable composition comprising 5-50% w/w of foamable polystyrene beads, 50-95% w/w of a phenolic and/or furan resin and an effective amount of an acid catalyst to a temporary mould in the shape of the mass and removing the temporary mould after the liquid composition commences to expand wherein the said catalysed foamable composition achieves temperatures sufficient to polymerise the phenolic and/or furan resin and expand the polystyrene polymer without requiring the application of external heat or energy sources.

**Detailed Description of the Invention**

The resins suitable for this invention are synthetic thermosetting resins. They may be obtained, for example, by the condensation of phenol, substituted phenols or furfuryl alcohol with aldehydes such as formaldehyde, acetal dehyde and furfural. However, as appreciated by those skilled in the art, phenol may be replaced, wholly or in part, by other substances with phenol-like chemistry, such as substituted phenols, cresol or natural phenolic compounds such as lignin or tannin. Tannin, in particular is a reactive substance that can be used in significant quantities as a low cost resin extender in the present invention. Furfuryl alcohol may be replaced by other reactive compounds containing the furan molecular structure, i.e. a ring formed by four carbon and one oxygen atom. The ring can have zero, one or two double bonds, preferably two as this makes the compound more reactive and more likely to form a char when exposed to high temperature. Formaldehyde may be replaced by other aldehydes, but these are generally more expensive and less reactive, and thus not preferred. Phenol-formaldehyde resins constitute the main class of phenolic resins suitable for the present invention. They are usually prepared by the reaction of phenol with aqueous 37-50% formaldehyde at 50-100°C in the presence of a basic catalyst.

The phenolic resins that are most useful in the present invention are referred to as phenol-aldehyde resins and generally containing one phenol and one aldehyde component. Two general types of phenolic resins that are well known in the art are the novolaks and the resols.

As general rule, liquid resol resins are prepared by reacting one or more phenols with an excess of one or more aldehydes in aqueous phase and in the presence of an alkaline catalyst. The excess of aldehyde may be small or large depending on the type of resin required.

Novolaks are usually prepared by reacting excess amounts of phenol with formaldehyde. The novolak resin molecule is built up from dihydroxyphenylmethane which upon further addition of formaldehyde and immediate condensation of alcohol groups thus formed with another phenol molecule gives linear compounds having the general formula $H[C_6H_3(OH).CH_2]_n C_6 H_4.OH$ as well as branched polymers in which some of the benzene rings have three methylene bridge attachments under acidic conditions. Novolaks can also be made under alkaline conditions and both types of novolaks can be incorporated into a resol, made separately or in-situ for the purpose of producing phenolic foams.

The term phenol can include not only phenol itself (including pure and technical grade phenol) but also other phenol compounds such as resorcinol, cresol, xylenol, chlorophenol, bisphenol-A, .alpha.-naphtol, β-naphtol and the like, and admixtures thereof.

Furan resins are defined for the purpose of this application as liquid resins that contain at least 10% w/w of compounds whose molecular structure incorporates the furan ring, with zero, one or two double bonds; and which can be cured by heat or the addition of an acid catalyst, to form a thermoset solid

The furan resin preferably contains some furfuryl alcohol, or reaction products of furfuryl alcohol, e.g. those described in US Patent 5,545,825.

Aldehydes to be used for reaction with the above-mentioned phenols or furfuryl alcohol usually contain about 1 to 8 carbon atoms and preferably about 1 to 3 carbon atoms. Specific examples of aldehydes include formaldehyde, acetaldehyde, propionic aldehyde, furfural, benzaldehyde and the like, and admixtures thereof. In the context of the present invention, the use of formaldehyde is preferred. The most common commercially available forms of formaldehyde include formalin which is usually a 30-52% by weight aqueous solution of formaldehyde in water; paraformaldehyde, which is a solid linear polymer of formaldehyde; and trioxane, which is a solid cyclic tripolymer of formaldehyde. The above and other sources of formaldehyde for reaction with phenol or furfuryl alcohol are intended to be embraced herein when the term formaldehyde is used.

Surfactants may be used and are selected from any suitable stabilising agent useful in stabilising liquid phenol-aldehyde resin foams. The surfactant can be anionic, cationic, non-ionic or amphoteric. The major restriction is that it must not interfere with the foaming process. A large number of suitable surfactants are known and are disclosed in numerous publications. Commonly used surfactants include silicon surfactants such as siloxane-oxyalkylene co-polymers and organic surfactants such as polyethers and polyalcohols, including their condensation products and alkylene oxides such as ethylene oxides and propylene oxides, with alkyl phenols, fatty acids, alkylsilanes and silicons. Specific examples include polyoxyethylene octadecylphenol, polyoxyethylene decylphenol sulphate, polyoxyethylene dodecyl phenol, polyoxyethylene octyl phenol, polyoxyethylene linoleic acid ester, polyoxyethylene stearic acid ester, polyoxyethylene sorbitan monolaurate, polyoxyethylene sorbitan tristearate.

The amount of surfactant used is usually not critical as small amounts, 1 % or less by weight of resin, often result in a substantial reduction in the surface tension of the resin.

Typical blowing agents which may be employed in preparing the phenolic or furan foam component of the present invention include physical and chemical blowing agents as well as mechanical blowing techniques. In a preferred embodiment the blowing agent is provided by the water in the resin, which is either present in the resin as prepared or generated in the curing process. While it is preferred, it is not essential that the phenolic resin or furan resin is foamable. However, for cost reasons and thermal properties, it is preferred that the phenolic resin or furan resin is foamable.

Typical acid catalysts include phosphoric acid, alkane sulphonic acids such as methane sulphonic acid, hydrochloric acid and sulphuric acid, or blends thereof. Suitable acids are those used in the art for curing phenolic resins. They are usually characterised as strong acids. The catalysts may also be selected from aromatic sulphonic acids such as phenol sulphonic acid, benzene sulphonic acid, toluene sulphonic acid and xylene sulphonic acid. Lewis acids such as aluminium chloride may also be used.

In most instances, the acid catalyst is added in amounts sufficient to reduce the initial pH of the liquid resin mixture below 4, preferably between 1.5 and 3.0. Also, the amount of catalyst needed can be determined by evaluating the desired cream times and firm times of the reaction mixture. Generally speaking, however, the concentration of catalyst contained in the foaming reaction mixture will vary between 5 and 20 w/w % of phenolic/furan resin. The catalyst converts the resin to polymer.

The liquid resin composition must have a suitable reactivity, meaning it must generate enough heat in an exothermic chemical reaction to cause the expandable polystyrene beads to expand. This expansion process will normally not occur unless the temperature of the resin reaches a temperature of at least 80°C, preferably at least 90°C, most preferably at least 100°C.

By reaching a particular temperature after catalysis it is meant that when 1000g of foamable resin is placed in a 10 litre cylindrical container of diameter 200mm that temperature is reached after catalysis. This feature of the present invention provides the advantage that panels may be prepared with relatively simple and inexpensive equipment. External heat sources such as steam or microwaves are generally not necessary. However, such external heat sources may be used to prepare the compositions of the present invention.

Additives that increase the heat generated by the catalysed resin can beneficially be added, for example furfuryl alcohol or peroxides, preferably hydrogen peroxide on account of its high reactivity and low cost. It will be appreciated that the use of such additives is to be taken into account as to whether a resin is suitable in terms of meeting the exotherm test.

Other additives may be included, such as those described in prior art foams, to improve any particular physical property or to reduce costs. For example, fire retardants containing eg. chlorine, bromine, boron, phosphorous or ammonia especially ammonium phosphate may be added to improve fire resistance. Expandable graphite can also be usefully employed, for example as described in DE 19910257A1. The graphite expands when exposed to high temperatures as encountered in a fire. The same patent application also describes the use of intumescent additives, e.g. a mixture of melamine, a PVA co-polymer, pentaerythritol and ammonium phosphate. These and other additives with similar effect may be incorporated in the compositions of the present invention. Low cost fillers such as perlite, fly ash, and vermiculite may be added to reduce cost. Such fillers may also be beneficial in that they can act as nucleating agents, reducing the average cell size of the resin foam component. Urea, melamine and other nitrogen containing compounds capable of reacting, like phenol and furfuryl alcohol, with aldehydes in a two-stage reaction known in the art as addition followed by condensation, can also be used on their own or as reaction products with aldehydes, preferably formaldehyde, to replace some of the phenolic or furan resins. Neutralising agents may be added to the foamable mixture, such as slow dissolving salts like anhydrous borax. The methods described in US Patent 4,122,045 are hereby incorporated into this specification.

The polystyrene polymer suitable for the present invention includes styrene polymers that are commonly used for preparing polystyrene beads that are to be blown to form polystyrene foam beads. As well as using styrene as the sole monomer other addition polymerisable monomers may be used and such copolymers are embraced by the term polystyrene in this specification. Styrene is always present as the major component of the polystyrene polymer. Furthermore, the polystyrene polymers may be modified by the addition of fire retardants. Preferred polystyrene beads contain flame retardants such as beads supplied by Huntsman under the trade name Spacel 4940 and Spacel 7740.

The present invention involves the use of unexpanded polystyrene beads. This enables relatively high levels of polystyrene to be incorporated into the final foam composite as the rheology and flow properties of the liquid compositions is much more manageable. If expanded polystyrene beads were used only relatively low levels of polystyrene could be incorporated into the composite foam when a pourable mixture is used.

The preferred polystyrene blowing agent and technique comprise the employment of liquid physical blowing agents, the agents which are volatile liquids which produce a blowing gas through vaporisation of the blowing agent or through decomposition of the blowing agent during the exotherm.

Numerous blowing agents suitable for use in the context of the present invention are well known in the prior art. Ideally, the blowing agent should be a liquid having an atmospheric pressure boiling point between -50° and 100° C. and more preferably between 0° and 50° C.

Examples of volatile blowing agents include organic compounds such as hydrocarbons, halogenated hydrocarbons, alcohols, ketones and ethers. Specific examples of hydrocarbon blowing agents include propane, pentane, isopentane and hexane. Pentane is the preferred blowing agent.

The blowing agents are employed in an amount sufficient to give the resulting polystyrene foam the desired density. In the case of the present invention it has been found particularly useful to employ expandable polystyrene beads that expand to a density of about 13-20 kg/m$^3$ when conventionally blown with steam in a single pass process. In this specification and in accordance with industry practice, this density refers to the density of packed expanded beads of polystyrene. To allow for packing volume, the actual density of these expanded beads is approximately 50% greater, that is approximately 20-30 kg/m$^3$. In the present invention the density of the phenolic foam phase is preferably at least twice that of the polystyrene foam and in expressing this ratio we refer to the actual densities of the two phases. Lower density phenolic foams offer the advantage of lower cost but poorer mechanical properties. For general purpose insulation panels, foam in the density range 25 - 50 kg/m$^3$ normally provides adequate strength, but even lower densities may be useful. For applications requiring maximum fire resistance and/or structural strength, higher density may be preferred, for example, 50 - 200 kg/m$^3$, or higher.

The relative weight proportions of the polystyrene polymer phase and phenolic/furan polymer phase are important to the present invention. In this specification the relative proportions are calculated by reference to the composition of the liquid foamable composition. In making these calculations the phenolic/furan phase includes all additives such as catalysts, fillers, water, surfactants and fire retardants and only excludes the polystyrene beads. It will be appreciated that the actual relative weight proportions of the polystyrene polymer phase and phenolic/furan polymer phase in the composite foam may vary slightly from the relative weight proportions calculated as above. These differences may be accounted for by the loss of volatile components. However, the above method is used for convenience.

A feature of the present invention that sets it apart from other rigid foams such as phenolic, polyurethane and expanded polystyrene (EPS) is the ability of the pre-rise foam mixture to retain a "memory" of its shape, to produce a final, fully expanded article with approximately the same shape as the pre-rise foamable mixture. "The same shape" means the ratio of length : width : height is about the same for the final, expanded foam as for the pre-rise mixture. A highly beneficial feature of this "memory" of pre-rise shape is the fact that the foam can be produced with extremely simple and thus low cost equipment. For example, a cardboard box, as used for packaging, can be used as a temporary mould to produce commercial size blocks. In such case, the four vertical corners of the box should be slit, allowing all vertical sides to be folded out to become horizontal, resting on the floor. The four sides of the box should be held in a vertical position (i.e. forming a box) only long enough to allow the foamable mixture to be poured into the box, and the rise or expansion to commence.

Following the commencement of the rise, the four vertical sides of the box can be folded out to become horizontal, allowing the foam to expand in all three dimensions, while maintaining approximately the initial shape, i.e. the ratio of length : width : height. The use of this dismantable or collapsible box or mould is an example of the use of a temporary mould. Further examples of temporary moulds are trays formed by frangible or meltable walls. After the foamable composition has begun to exotherm, a temperature or pressure is reached where the wall melts, weakens or ruptures such that the expanding foamable composition is no longer confined by the walls of the temporary mould. When the expanding foamable composition is no longer confined by the walls, the walls are regarded as being removed. Removal of the walls may be achieved by melting or breaking as well as by physical intervention by an operator. The walls of the dismantable or collapsible box may alternatively be held in the shape that defines the mould by meltable retaining means. When the foamable composition exotherms and expands it reaches a predetermined temperature that causes the retaining means to break and the walls of the mould to fall outwards, allowing the expanding mass to be not confined. A temporary mould, i.e. a device that spatially confines the catalysed liquid foamable composition only until the expansion commences, can also beneficially be used in continuous lines, for example, in the production of continuous blocks. In this case, the temporary mould can be created, for example, by mechanically folding paper feeding off a roll, into a trough-like shape that confines a suitable amount of the catalysed liquid composition only long enough for the expansion to commence.

In a variation of the above process, the temporary mould containing the catalysed liquid foamable composition may be placed in a second or outer mould. This outer mould may be open on one face or totally enclosed. We have found that by using a temporary mould within an outer mould that the final faces of the composite foam are more uniform and reproducible and thus require less trimming.

Remarkably, using this simple method, allowing the bulk of the expansion of the foam to take place without any spatial constraints, blocks of commercially useful size can be produced i.e. in excess of 1m$^3$. This is in contrast to other plastic block foams, which require spatial confinement in at least two dimensions (phenolic and polyurethane foams) and often three dimensions (expanded polystyrene foam EPS). In the case of EPS, there is additionally a requirement for an external supply of pressurised steam, adding to the complexity and cost of the production equipment.

While the simple method described above can be used to produce blocks of foam of the invention, the foam can also be produced in a confined space, provided the mould is strong enough to withstand the pressure exerted by the expanding foam. The foam of the invention can also be produced on continuous lines. One of the significant advantages of the present invention is that external heat or energy sources are not necessary. It is surprising that composite foams can be prepared where the exothermic heat of reaction from the polymerisation of one polymeric phase can be used to foam not only this phase but the other polymer phase. This is contrary to the prior teaching discussed earlier where the separation of these roles is considered essential. The prior art generally uses expanded polystyrene beads and relies on external heat being applied. The invention will be further described by reference to preferred embodiments in the following examples.

**Example 1**

A foamable mixture was prepared using the following formulation where perlite was included as a nucleating agent to assist in the foaming of the phenolic resin.:

| | |
|---|---|
| Phenolic resin, grade IL1737 ex Huntsman | 1000g |
| Polystyrene beads, grade Spacel 4940 ex Huntsman | 200g |
| Furfuryl Alcohol | 100g |
| Teric C12 (surfactant) ex Huntsman | 40g |
| Perlite | 10g |
| 75% phenol sulphonic acid, ⎱ Premix | 140g |
| 85% phosphoric acid | 60g |

In a 10 litre bucket, all above components except the acid blend were mixed together and warmed to 30°C. The acid catalyst blend was added, and the whole mixture stirred vigorously for 30 seconds. In less than 1 minute, the liquid mixture started to expand rapidly and the temperature of the mixture reached 100°C. In a short period of time, a plastic body of foam was created, with an approximate volume of 9 litres. On the same day a sample was cut from the foam, weighed and measured and found to have a density of 151kg/m$^3$. Expanded polystyrene beads were clearly visible on all cut surfaces, having a diameter mostly in the range 1 to 2mm. The estimated average size was 1.5mm, corresponding to a volume of 1.8mm$^3$. As the average volume of the unexpanded polystyrene beads was only about 0.05mm$^3$, the average expansion was 36 times the original volume. Thus, as the specific density of the unexpanded polystyrene beads was 1000kg/m$^3$, the average specific density of the expanded beads was calculated to be 28kg/m$^3$ As the weight percentage of polystyrene in the mixture was 200g:1550g = 13%, it follows that the weight component of polystyrene would be 13% of 151kg/m$^3$ = 20kg. The weight percent of the phenolic/furan polymer phase was calculated to be 87%. As the average specific density of the expanded polystyrene beads was previously calculated to be 28kg/m$^3$, the weight 20kg per m$^3$ would represent a volume of 20:28m$^3$ = 0.71m$^3$ ie. a volume fraction of 71 %.

The cut foam surface was not friable like prior art phenolic foams, yet the foam would not melt and burn like polystyrene foam when subjected to a flame.

**Example 2**

This example illustrates the effect of higher polystyrene content A foamable mixture was prepared using the following formulation:

| | |
|---|---|
| Phenolic resin, grade IL - 1737 ex Huntsman | 1000g |
| Polystyrene beads, grade Spacel 4940 ex Huntsman | 400g |
| Furfuryl Alcohol | 100g |
| Teric C12 (surfactant) ex Huntsman | 40g |
| Perlite | 10g |
| 75% phenolsulphonic acid ⎫ | 140g |
| ⎬ Premix | |
| 85% phosphoric acid ⎭ | 60g |

In a 10 litre bucket, all above components except the acid blend were mixed together and warmed to 30°C. The acid catalyst blend was added, and the whole mixture stirred vigorously for 30 seconds. In less than 1 minute, the liquid mixture started to expand rapidly and the temperature of the mixture reached 100°C. In a short period of time, a plastic body of foam was created, with an approximate volume of 14 litres. A sample was cut from the foam on the same day, weighed and measured and found to have a density of 98kg/m$^3$. A multitude of expanded polystyrene beads were clearly visible on all cut surfaces, having a diameter mostly in the range 1 to 2mm, with an estimated average of 1.5mm.

The weight percentage of polystyrene in the mixture was calculated to be 23%, and the volume percentage to be 81 %. The weight percent of phenolic/furan polymer was calculated to be 77%.

The cut foam surface was not friable like prior art phenolic foams, yet the foam would not melt and burn like polystyrene foam when subjected to a flame.

### Example 3

This example shows the effect of a higher level of furfuryl alcohol, resulting in more expansion and thus a lower density of foam. This example also illustrates the use of a furan resin.

| | |
|---|---|
| Phenolic resin, grade 1L – 1737 ex Huntsman | 1000g |
| Polystyrene beads, grade Spacel 4940 ex Huntsman | 400g |
| Furfuryl Alcohol | 150g |
| Teric C12 (surfactant) ex Huntsman | 40g |
| Perlite | 10g |
| 75% phenol sulphonic acid ⎫ | 140g |
| ⎬ Premix | |
| 85% phosphoric Acid ⎭ | 60g |

In a 10 litre bucket, the resin, polystyrene beads, furfuryl alcohol, Teric C12 and Perlite were mixed, and the mix warmed to 30°C. The acid catalyst blend was then added, and the whole mixture stirred vigorously for 30 seconds. In less than 1 minute, the liquid mixture started to expand rapidly and the temperature of the mixture increased to 103°C. In a short period of time a plastic body of foam was created with an approximate volume of 20 litres.

A sample was cut from the foam on the same day, weighed and measured and found to have a density of 74kg/m$^3$. Four weeks later the sample was weighed again, showing a weight loss of 10% corresponding to a mature density of 67 kg/m$^3$. It is likely that the weight loss was made up mostly of excess moisture and possibly the pentane blowing agent in the polystyrene beads. Expanded polystyrene beads were clearly visible on all cut surfaces, having a diameter mostly in the range 1.0 to 2.5 mm with an estimated average size of 1.5 mm, corresponding to a volume of 1.8 mm$^3$. As the average volume of the unexpanded polystyrene beads was only about 0.05 mm$^3$, the average expansion was 36 times the original volume. Thus, as the specific density of the unexpanded polystyrene beads was 1000 kg/m$^3$, the average specific density of the expanded beads was calculated to be 28 kg/m$^3$. As the weight percentage of polystyrene in the mixture was 400g : 1800g = 22%, it follows that the weight component of polystyrene would be 22% of 74kg/m$^3$. As the specific density of the expanded polystyrene beads was previously calculated to be 28kg/m$^3$, the weight

16kg should represent a volume of $\dfrac{16}{28} = 0.57 \text{m}^3,$ ie. volume fraction of 57%.

Thus, expressed in terms of both weight and volume ratios, the composite foam could be described as comprising a polystyrene foam phase representing 22% by weight but 57% by volume, and a phenolic/furan foam phase representing 78% by weight but only 43 % by volume. The phenolic/furan foam component was calculated to have a specific density

of $\dfrac{0.78x74}{0.43} \text{kg/m}^3 = 134\text{kg/m}^3$ (before loss of volatiles on aging). Thus, in this case, the density of the phenolic/furan foam component was found to be $\dfrac{134}{28} = 4.8$ times higher than the polystyrene foam density.

The cut foam surface was not friable like prior art phenolic foams, yet the foam would not melt and burn like polystyrene foam when subjected to a flame. This is surprising considering that about three quarters of the volume of the composite foam was made up of polystyrene foam, which on its own immediately melts and then burns, when subjected to a flame.

**Example 4**

This example shows that it is possible to foam a phenolic resin without the presence of a surfactant.

| | |
|---|---|
| Phenolic resin Cascophen PA 2027 ex Borden | 1000g |
| Spacel 4940 ex Huntsman | 600g |
| 75% phenolsulphonic acid ⎤ | 80g |
| ⎬ Premix | |
| 85% phosphoric acid ⎦ | 60g |

In a 10 litre bucket, the resin and polystyrene beads were mixed and warmed to 30°C. The acid catalyst blend was added, and the whole mixture stirred vigorously for 30 seconds. In less than 1 minute, the liquid mixture started to expand rapidly, and the temperature of the mixture increased to 102°C. In a short period of time, a plastic body of foam was created with an approximate volume of 22 litres. A sample was cut from the foam, weighed and measured and found to have a density of 61kg/m$^3$. Four weeks later the sample was weighed again, showing a weight loss of 10% corresponding to a mature density of 55kg/m$^3$. It is likely that the weight loss was made up mostly of excess moisture and possibly the pentane blowing agent in the polystyrene beads.

Expanded polystyrene beads were clearly visible on all cut surfaces, having a diameter mostly in the range 1.0 to 2.5 mm. The estimated average size was 1.5mm, corresponding to a volume of 1.8mm$^3$. As the average volume of the unexpanded polystyrene beads was only about 0.05mm$^3$, the average expansion was 36 times the original volume. Thus, as the specific density of the unexpanded polystyrene beads was 1000kg/m$^3$, the specific density of the expanded beads was calculated to be 28kg/m$^3$. As the weight percentage of polystyrene in the mixture was 600g : 1740g = 34%, it follows that the weight component of polystyrene would be 34% of 61kg/m$^3$ = 21kg/m$^3$. As the specific density of the expanded polystyrene beads was previously calculated to be 28kg/m$^3$, the weight 21kg should represent a volume of

$\dfrac{21}{28} = 0.75 \text{m}^3,$ ie. a volume fraction of 75%.

Thus, expressed in terms of both weight and volume ratios, the composite foam could be described as comprising a polystyrene foam phase representing 34% by weight but 75% by volume, and a phenolic foam phase representing 66% by weight but only 25% by volume. The phenolic foam component was calculated to have a specific density of

$$\frac{0.66 \times 61}{0.25} \text{kg/m}^3 = 161 \text{kg/m}^3$$ (before loss of volatiles on aging). Thus, in this case, the density of the phenolic foam component was found to be $\frac{161}{28} = 5.8$ times higher than the polystyrene foam density.

The cut foam surface was not friable like prior art phenolic foams, yet the foam would not melt and burn like polystyrene foam when subjected to a flame. This is surprising considering that three quarters of the volume of the composite foam was made up of polystyrene foam, which on its own, immediately melts and then burns when subjected to a flame.

**Example 5**

This example shows that the process of the present invention can be used to produce composite foam of very low density, i.e. less than 30 kg/m$^3$.

| | |
|---|---|
| Phenolic resin, grade IL1737 ex Huntsman | 3,000g |
| Furan Resin, grade NBB101 ex Foseco | 1,200g |
| Polystyrene beads, grade Spacel 7740 ex Huntsman | 3,900g |
| Ammonium Phosphate | 600g |
| 50% sulphuric acid, } Premix | 270g |
| 81% phosphoric acid | 270g |
| 50% hydrogen peroxide | 60g |

In a 25 litre bucket, lined with a plastic bag, the phenolic resin, furan resin and polystyrene beads were mixed together and warmed to 31 °C. The acid catalyst pre-mix was added, and the whole mixture stirred vigorously for 45 seconds. The plastic bag containing the mixture was then pulled out of the bucket, to allow the foam expansion to take place without major constraint. The expansion was essentially completed in less than five minutes. After 2 hours a samples was cut and found to have density of 25kg/m$^3$. Remarkably, even at this low density the cut foam surface was not friable like prior art phenolic foams, yet the foam would not melt and burn like polystyrene foam when subjected to a flame. This example incorporates a commercially available furan resin, a fire retardant and a peroxide, the latter being an example of additives that increase the exothermic heat generated by the process of the invention.

**Example 6**

This example illustrates the ability of foam of the invention to have a "memory" of its pre-rise shape.

| | |
|---|---|
| Phenolic resin, grade IL1737 ex Huntsman | 30,000g |
| Furan resin, grade NBB101 ex Foseco | 6,000g |
| Polystyrene beads, grade Spacel 4940 ex Huntsman | 15,000g |
| Ammonium phosphate | 2,700g |
| 50% sulphuric acid, } Premix | 2,700g |
| 81% phosphoric acid | 2,700g |

Into a 100 litre drum the phenolic resin, furan resin, ammonium phosphate and polystyrene beads were added, mixed and warmed to 27°C. The acid catalyst premix was added, and the whole mixture stirred vigorously for 40 seconds, then poured into a cardboard box of size 600 x 600 x 300mm (length x width x height). The box was lined with a plastic sheet, and all four vertical corners were slit, allowing the sides to be folded out to a horizontal position, i.e. resting on the floor. The four sides of the box were held in a vertical position (to form a box) until the rise commenced, which occurred in less than one minute. The sides of the box were then left unsupported, and were quickly pushed out to a horizontal position by the expanding foam. Remarkably, the unsupported foam kept expanding in all directions, approximately maintaining its pre-rise shape, ending up in a fully expanded block of size 1.2 x 1.2 x 0.6m, having almost vertical sides. A sample of the foam was cut and found to have a density of 42kg/m$^3$.

**Claims**

1. A polymeric composite foam comprising a continuous phase of a furan polymer or phenolic and furan polymer and a disperse phase of foamed polystyrene polymer wherein the composite foam is prepared by reacting a liquid foamable composition comprising 5-50% w/w of foamable unexpanded polystyrene beads, 50-95% w/w of a resin or resin mixture selected from the group of a furan resin, a phenolic resin and furan resin, and a phenolic resin and furfuryl alcohol and an effective amount of an acid catalyst wherein the reacted foamable composition achieves temperatures sufficient to polymerise said resin or resin mixture and expand the polystyrene polymer without requiring the application of external heat or energy sources.

2. The polymeric composite foam as defined in claim 1 wherein the furan resin contains furfuryl alcohol or reaction products of furfuryl alcohol.

3. The polymeric composite foam as defined in claim 1 or 2 wherein the weight percent of polystyrene polymer in the composite foam is in the range 5-50.

4. The polymeric composite foam as defined in claim 1 or 2 wherein the weight percent of the polystyrene polymer in the composite foam is 10-40.

5. The polymeric composite foam as defined in any one of claims 1 or 2 wherein the composite foam has a density in the range 25 - 200 kg/m$^3$.

6. The polymeric composite foam as defined in claim 1 or 2 wherein the composite foam has a density in the range 25 - 50 kg/m$^3$.

7. The polymeric composite foam as defined in claim 1 wherein the composite foam has a density in the range 50 - 200 kg/m$^3$.

8. The polymeric composite foam as defined in claim 1 wherein the furan polymer or phenolic and furan polymer in the continuous phase is foamed.

9. A steel clad insulation panel having a core of a polymeric composite foam comprising a continuous phase of a furan polymer or phenolic and furan polymer and a disperse phase of foamed polystyrene polymer wherein the weight ratio of continuous phase to disperse phase is at least 1.

10. A steel clad insulation panel as defined in claim 9 wherein the furan polymer or phenolic and furan polymer is foamed.

11. A method of forming a mass of polymeric composite foam comprising adding a liquid foamable composition comprising 5-50% w/w of foamable polystyrene beads, 50-95% w/w of a phenolic and/or furan resin and an effective amount of an acid catalyst to a temporary mould in the shape of the mass and removing the temporary mould after the liquid composition commences to expand wherein the said catalysed foamable composition achieves temperatures sufficient to polymerise the phenolic and/or furan resin and expand the polystyrene polymer without requiring the application of external heat or energy sources.

12. The method of claim 11 wherein the phenolic and/or furan resin is mixed with furfuryl alcohol.

13. The method as defined in claim 11 wherein the temporary mould is placed on an outer mould, which outer mould defines the shape of the composite foam after expansion.

14. The method as defined in claims 11 or 12 wherein the phenolic and/or furan resin is foamed.

15. The polymeric composite foam as defined in claim 1 wherein the catalysed foamable composition reaches at least 80°C.

16. The polymeric composite foam as defined in claim 1 wherein the catalysed foamable composition reaches at least 90°C.

17. The polymeric composite foam as defined in claim 1 wherein the catalysed foamable composition reaches at least 100°C.

18. The polymeric composite foam as defined in claim 1 comprising an additive selected from the group consisting of fire retardants, expandable graphite, intumescent agents and fillers.

19. The polymeric composite foam as defined in claim 18 wherein the fire retardant releases ammonia gas when exposed to fire.

**Patentansprüche**

1. Polymerer Verbundschaum, umfassend eine kontinuierliche Phase eines Furanpolymers oder eines Phenol- und Furanpolymers und eine disperse Phase aus geschäumtem Polystyrolpolymer, wobei der Verbundschaum hergestellt wird durch Umsetzen einer flüssigen schäumbaren Zusammensetzung, umfassend 5-50% w/w an schäumbaren nicht expandierten Polystyrolkugeln, 50-95% w/w eines Harzes oder einer Harzmischung, ausgewählt aus der Gruppe aus einem Furanharz, einem Phenolharz und Furanharz, und einem Phenolharz und Furfurylalkohol und einer wirksamen Menge eines Säurekatalysators, wobei die umgesetzte schäumbare Zusammensztung Temperaturen erreicht, die ausreichend sind, um das Harz oder die Harzmischung zu polymerisieren und das Polystyrolpolymer zu expandieren, ohne dass die Anwendung von externen Hitze- oder Energiequellen notwendig ist.

2. Polymerer Verbundschaum nach Anspruch 1, wobei das Furanharz Furfurylalkohol oder Reaktionsprodukte des Furfurylalkohols enthält.

3. Polymerer Verbundschaum nach Anspruch 1 oder 2, wobei der gewichtsprozentuale Anteil an Polystyrolpolymer im Verbundschaum im Bereich von 5-50 liegt.

4. Polymerer Verbundschaum nach Anspruch 1 oder 2, wobei der gewichtsprozentuale Anteil des Polystyrolpolymers im Verbundschaum 10-40 beträgt.

5. Polymerer Verbundschaum nach einem der Ansprüche 1 oder 2, wobei der Verbundschaum eine Dichte im Bereich von 25-200 kg/m$^3$ besitzt.

**6.** Polymerer Verbundschaum nach Anspruch 1 oder 2, wobei der Verbundschaum eine Dichte im Bereich von 25-50 kg/m$^3$ besitzt.

**7.** Polymerer Verbundschaum nach Anspruch 1, wobei der Verbundschaum eine Dichte im Bereich von 50-200 kg/m$^3$ besitzt.

**8.** Polymerer Verbundschaum nach Anspruch 1, wobei das Furanpolymer oder das Phenol- und Furanpolymer in der kontinuierlichen Phase geschäumt wird.

**9.** Stahlmantelisolationspanel mit einem Kern aus einem polymeren Verbundschaum, umfassend eine kontinuierliche Phase eines Furanpolymers oder Phenol- und Furanpolymers und eine disperse Phase aus einem geschäumten Polystyrolpolymer, wobei das Gewichtsverhältnis der kontinuierlichen Phase zur dispersen Phase zumindest 1 beträgt.

**10.** Stahlmantelisolationspanel nach Anspruch 9, wobei das Furanpolymer oder das Phenol- und Furanpolymer geschäumt ist.

**11.** Verfahren zur Herstellung einer Masse aus einem polymeren Verbundschaum, umfassend das Zugeben einer flüssigen schäumbaren Zusammensetzung, umfassend 5-50% w/w an schäumbaren Polystyrolkugeln, 50-95% w/w eines Phenol- und/oder Furanharzes und einer wirksamen Menge eines Säurekatalysators zu einer temporären Form in Gestalt der Masse und Entfernen der temporären Form, nachdem die flüssige Zusammensetzung zu expandieren beginnt, wobei die katalysierte schäumbare Zusammensetzung Temperaturen erreicht, die ausreichend sind, um das Phenol- und/oder Furanharz zu polymerisieren und das Polystyrolpolymer zu expandieren, ohne dass die Anwendung externer Hitze- oder Energiequellen notwendig ist.

**12.** Verfahren nach Anspruch 11, wobei das Phenol- und/oder Furanharz mit Furfurylalkohol vermischt wird.

**13.** Verfahren nach Anspruch 11, wobei die temporäre Form in einer äußeren Form angeordnet ist, wobei die äußere Form die Gestalt des Verbundschaums nach Expansion definiert.

**14.** Verfahren nach den Ansprüchen 11 oder 12, wobei das Phenol- und/oder Furanharz aufgeschäumt wird.

**15.** Polymerer Verbundschaum nach Anspruch 1, wobei die katalysierte schäumbare Zusammensetzung zumindest 80°C erreicht.

**16.** Polymerer Verbundschaum nach Anspruch 1, wobei die katalysierte schäumbare Zusammensetzung zumindest 90°C erreicht.

**17.** Polymerer Verbundschaum nach Anspruch 1, wobei die katalysierte schäumbare Zusammensetzung zumindest 100°C erreicht.

**18.** Polymerer Verbundschaum nach Anspruch 1, umfassend ein Additiv, ausgewählt aus der Gruppe, bestehend aus Feuerretardiermitteln, expandierbarem Graphit, intumeszierenden Mitteln und Füllstoffen.

**19.** Polymerer Verbundschaum nach Anspruch 18, wobei das Feuerretardiermittel Ammoniakgas freisetzt, wenn es Feuer ausgesetzt wird.

**Revendications**

**1.** Mousse composite polymère comprenant une phase continue d'un polymère furannique ou d'un polymère phénolique et furannique et une phase dispersée d'un polymère polystyrène expansé, dans laquelle la mousse composite est préparée par réaction d'une composition liquide expansible contenant de 5 à 50% en poids de billes de polystyrène non expansées expansibles, de 50 à 95 % en poids d'une résine ou d'un mélange de résines choisies dans le groupe comprenant une résine furannique, une résine phénolique et furannique, et une résine phénolique et de l'alcool furfurylique et une quantité efficace d'un catalyseur acide, dans laquelle la composition expansible, ayant réagi, atteint des températures suffisantes pour polymériser ladite résine ou ledit mélange de résines et pour expanser le polymère polystyrène sans nécessiter l'application de sources de chaleur ou d'énergie externes.

**2.** Mousse composite polymère selon la revendication 1, dans laquelle la résine furannique contient de l'alcool furfurylique ou des produits de réaction d'alcool furfurylique.

**3.** Mousse composite polymère selon la revendication 1 ou 2, dans laquelle le pourcentage en poids du polymère polystyrène dans la mousse composite est situé dans la plage allant de 5 à 50.

**4.** Mousse composite polymère selon la revendication 1 ou 2, dans laquelle le pourcentage en poids du polymère polystyrène dans la mousse composite est situé dans la plage allant de 10 à 40.

**5.** Mousse composite polymère selon l'une quelconque des revendications 1 et 2, dans laquelle la mousse composite a une densité située dans la plage allant de 25 à 200 kg/m$^3$.

**6.** Mousse composite polymère selon la revendication 1 ou 2, dans laquelle la mousse composite a une densité située dans la plage allant de 25 à 50 kg/m$^3$.

**7.** Mousse composite polymère selon la revendication 1, dans laquelle la mousse composite a une densité située dans la plage allant de 50 à 200 kg/m$^3$,

**8.** Mousse composite polymère selon la revendication 1 dans laquelle le polymère furannique ou le polymère phénolique et furannique dans la phase continue est expansé.

**9.** Panneau d'isolation à enveloppe métallique possédant un noyau en mousse composite polymère comprenant une phase continue d'un polymère furannique ou d'un polymère phénolique et furannique et une phase dispersée d'un polymère Polystyrène expansé, dans lequel le rapport en poids de la phase continue sur la phase dispersée est au moins égal à 1.

**10.** Panneau d'isolation à enveloppe métallique selon la revendication 9, dans lequel le polymère furannique ou le polymère phénolique et furannique est expansé.

**11.** Procédé de fabrication d'une masse de mousse composite polymère comprenant l'addition d'une composition expansible liquide contenant de 5 à 50 % en poids de billes de polystyrène expansibles, de 50 à 95 % en poid-5 de résine phénolique et/ou furannique et une quantité efficace d'un catalyseur acide dans un moule temporaire ayant la forme de la masse et le retrait du moule temporaire après que la composition liquide a commencé à s'expanser, dans lequel ladite composition expansible catalysée atteint des températures suffisantes pour polymériser la résine phénolique et/ou furannique et pour expanser le polymère polystyrène sans nécessiter l'application de sources de chaleur ou d'énergie externes.

**12.** Procédé selon la revendication 11, dans lequel la résine phénolique et/ou furannique est mélangée avec de l'alcool furfurylique,

**13.** Procédé selon la revendication 11, dans lequel le moule temporaire est placé sur un moule extérieur, lequel moule extérieur définit la forme de la mousse composite après expansion.

**14.** Procédé selon la revendication 11 ou 12, dans lequel la résine phénolique et/ou furannique est expansée.

**15.** Mousse composite polymère selon la revendication 1, dans laquelle la composition expansible catalysée atteint une température d'au moins 80 °C.

**16.** Mousse composite polymère selon la revendication 1, dans laquelle la composition expansible catalysée atteint une température d'au moins 90 °C.

**17.** Mousse composite polymère selon la revendication 1, dans laquelle la composition expansible catalysée atteint une température d'au moins 100 °C.

**18.** Mousse composite polymère selon la revendication 1 contenant un additif choisi dans le groupe comprenant des ignifugeants, du graphite expansible, des agents intumescents et des charges.

**19.** Mousse composite polymère selon la revendication 18, dans laquelle l'ignifugeant dégage du gaz ammoniac lorsqu'il est exposé au feu.

**EP 1 368 421 B1**

**REFERENCES CITED IN THE DESCRIPTION**

**Patent documents cited in the description**

- GB 2013209 A
- BE 865001
- SU 585189
- DE 19910257
- US 5545825 A
- DE 19910257 A1
- US 4122045 A